(19) **Europäisches Patentamt European Patent Office Office européen des brevets**

(11) **EP 4 263 310 B1**

(12) **FASCICULE DE BREVET EUROPEEN**

(45) Date de publication et mention de la délivrance du brevet:
**04.02.2026 Bulletin 2026/06**

(21) Numéro de dépôt: **21836065.9**

(22) Date de dépôt: **07.12.2021**

(51) Classification Internationale des Brevets (IPC):
**B60W 50/00** *(2006.01)* **B60W 60/00** *(2020.01)*

(52) Classification Coopérative des Brevets (CPC):
**B60W 50/0098; B60W 60/001;** B60W 2050/0088;
B60W 2530/00; B60W 2530/10; B60W 2530/20;
B60W 2552/00; B60W 2552/05; B60W 2554/406;
B60W 2555/20

(86) Numéro de dépôt international:
**PCT/EP2021/084647**

(87) Numéro de publication internationale:
**WO 2022/128643 (23.06.2022 Gazette 2022/25)**

(54) **MÉTHODE D'AIDE À LA CONDUITE D'UN VÉHICULE AUTOMOBILE AUTONOME SUR UNE ROUTE**

VERFAHREN ZUR UNTERSTÜTZUNG DES FAHRENS EINES AUTONOMEN KRAFTFAHRZEUGS AUF EINER STRASSE

METHOD FOR ASSISTING WITH DRIVING AN AUTONOMOUS MOTOR VEHICLE ON A ROAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2020 FR 2013417**

(43) Date de publication de la demande:
**25.10.2023 Bulletin 2023/43**

(73) Titulaire: **Ampere SAS
92100 Boulogne-Billancourt (FR)**

(72) Inventeurs:
• **ATOUI, Hussam
78084 GUYANCOURT (FR)**
• **GONZALEZ BAUTISTA, David
78210 Saint Cyr l'école (FR)**
• **MAHTOUT, Imane
78084 GUYANCOURT (FR)**
• **MONTERO MILANES, Vincente
47008 Valladolid (ES)**

(74) Mandataire: **Renault Group
Renault s.a.s.
1 avenue du Golf
FR TCR AVA 055
78084 Guyancourt Cedex (FR)**

(56) Documents cités:
**US-A1- 2020 218 271 US-A1- 2020 276 988**

**Description**

**Domaine technique**

La présente invention concerne une méthode d'aide à la conduite d'un véhicule automobile autonome sur une route, un dispositif d'aide à la conduite pour contrôler ledit véhicule automobile autonome, un produit programme d'ordinateur comportant des instructions de programme exploitables par ledit dispositif d'aide à la conduite et un véhicule automobile autonome comportant ledit dispositif d'aide à la conduite.

**Technique antérieure**

Ces dernières années, les progrès réalisés dans l'équipement des véhicules automobiles en système d'assistance au conducteur ont contribué à une amélioration significative de la sécurité routière. Le défi du futur est de concevoir des véhicules automobiles autonomes. Un véhicule automobile autonome est un véhicule automobile adapté pour rouler sur une route ouverte sans ou avec peu d'intervention d'un conducteur. Le concept vise à développer et à produire un tel véhicule pouvant à terme circuler en toute sécurité sur une voie publique et ceci quel que soit le trafic généré par d'autres véhicules ou des obstacles (humain, animal, arbre...) présents sur la voie. La notion de véhicule automobile autonome couvre ici un véhicule automobile totalement autonome dans lequel l'intervention d'un opérateur humain n'est pas nécessaire pour la conduite dudit véhicule. Cette notion couvre également un véhicule automobile dit « semi-autonome » disposant de systèmes automatisés d'aide à la conduite mais dans lequel l'intervention de l'opérateur humain reste globalement importante.

Le fonctionnement d'un véhicule automobile autonome est généralement régi conjointement par un dispositif de navigation embarqué et par un dispositif de définition d'une trajectoire prédéterminée. Le dispositif de navigation embarqué est conçu pour programmer un itinéraire à grande échelle, c'est-à-dire à l'échelle d'un réseau routier. Cet itinéraire comprend une série de segments de route consécutifs adaptés pour relier une position d'origine à une destination. Cette série de segments de route est éventuellement variable dynamiquement en fonction des conditions de circulation détectées ou des contraintes de déplacement prédéfinies du réseau routier (fermeture de certains tronçons pour travaux en cours, par exemple).

Le dispositif de définition de trajectoire de référence est quant à lui conçu pour traiter automatiquement des trajectoires de déplacement de véhicules à l'échelle locale, de l'ordre de plusieurs dizaines ou centaines de mètres. Ce dispositif de définition de trajectoire de référence est adapté pour mettre en œuvre l'itinéraire programmé par le système de navigation. Cette mise en œuvre est réalisée en déterminant la position, la direction et la vitesse du véhicule au fil du temps en fonction des contraintes de mouvement, telles que des contraintes dynamiques du véhicule automobile (vitesse maximale, accélération longitudinale, angle de braquage, etc...), des contraintes environnementales (obstacles sur la route, etc...) ou des contraintes d'optimisation (minimisation de l'accélération latérale du véhicule automobile, par exemple).

Dans un contexte de conduite autonome, un véhicule automobile est agencé pour suivre un itinéraire urbain ou extra-urbain prédéfini en parcourant une série de tronçons de route déterminée par le dispositif de navigation embarqué. La trajectoire de référence est définie par un ensemble de coordonnées cartésiennes variables dans le temps et calculées en temps réel en fonction du tronçon de route au niveau duquel l'itinéraire prédéfini est atteint et de paramètres environnementaux. La mise en œuvre de ce calcul peut se faire à l'aide d'un dispositif de reconnaissance de marquages routiers, des moyens de détection radar ou laser, d'un dispositif de reconnaissance d'obstacles etc. Au cours du roulage, le véhicule automobile suit une trajectoire réelle qui peut être différente de la trajectoire de référence. En effet, au cours de ce roulage, le véhicule automobile subit un certain nombre de contraintes (pression des roues, dénivelé de la route, force du vent, etc...) qui peuvent ne pas été intégré par le dispositif de définition de la trajectoire prédéterminée. Dès lors, il peut exister un décalage entre cette trajectoire réelle et la trajectoire de référence qu'il convient de minimiser.

Le document US2018/0348763 divulgue une méthode d'aide à la conduite conçue pour optimiser le contrôle d'un véhicule automobile autonome. Cette méthode comporte une étape de réception d'une pluralité de données de perception d'un environnement de conduite entourant le véhicule et une étape de génération d'une commande pour le contrôle dudit véhicule. Cette commande peut être générée selon un mode de délibération ou selon un mode intuitif. Dans le mode de délibération, la commande est générée à partir d'un ensemble de règles de conduite prédéfinie. Dans le mode intuitif, la commande est générée à partir d'un modèle d'apprentissage automatique. Le choix du mode décisionnel, mode de délibération ou mode intuitif, est réalisé à partir des données collectées. Dans une situation complexe, le procédé est adapté pour utiliser le mode de délibération. Dans une situation plus familière, le procédé est adapté pour utiliser le mode intuitif. Le procédé d'aide à la conduite se répète alors en passant d'un mode décisionnel à l'autre. Bien que ce procédé permette d'obtenir un procédé d'aide à la conduite adaptatif, il est nécessaire d'entretenir et de mettre à jour deux dispositifs décisionnels en parallèle, i.e. un dispositif basé sur des règles et un dispositif basé sur un apprentissage automatique. Ces deux dispositifs doivent être parfaitement synchronisés car le procédé peut faire appel à l'un ou l'autre selon le mode de fonctionnement sélectionné. Ceci peut entraîner des retards dans le processus qui peuvent être critiques pour certaines manœuvres. En outre, l'apprentissage automatique divulgué dans ce document nécessite un apprentissage complet à chaque traitement de nouvelles données qui peuvent fournir des performances différentes d'un cycle à l'autre.

Il existe donc un besoin de proposer une méthode d'aide à la conduite plus réactive tout en étant plus précise dans la réponse de la commande à apporter.

La demande de brevet US 2020/0218271 A1 décrit un procédé dans lequel les caractéristiques de conduite d'un véhicule autonome sont ajustées par rapport à un historique du niveau de satisfaction de l'utilisateur du véhicule. La demande de brevet US 2020/0276988 A1 décrit un procédé dans lequel les caractéristiques de conduite d'un véhicule autonome sont ajustées par rapport à des prédictions de risques.

**Exposé de l'invention**

La présente invention vise à remédier au moins en partie à ce besoin.

Plus particulièrement, la présente invention vise à améliorer le contrôle d'un véhicule autonome sur une route.

Un premier objet de l'invention concerne une méthode d'aide à la conduite d'un véhicule automobile autonome sur une route selon la revendication 1.

L'invention propose une méthode décisionnelle à évolution multiple capable de générer la réponse la plus adaptée en combinant en temps réel toutes les informations disponibles avec les connaissances acquises dans des situations similaires dans le passé. Cette méthode offre deux fonctionnalités principales pour satisfaire ces exigences. Dans une première fonctionnalité, la méthode permet de prendre en compte les données approximatives de trois principaux paramètres affectant les performances du véhicule automobile autonome, à savoir l'état du véhicule, l'état de la route et l'interaction avec l'environnement. Dans une seconde fonctionnalité, la méthode permet d'adapter la décision à une situation actuelle en comparant cette situation actuelle avec d'autres situations précédentes auxquelles le véhicule a été confronté. Cet apprentissage permet d'adapter en conséquence le contrôle du véhicule.

Selon l'invention, la pluralité des données reçues comprend un premier type de données, un second type de données et un troisième type de données, les données du premier type de données concernant une évolution du véhicule, les données du second type de données concernant une évolution de la route, les données du troisième type de données concernant une évolution de l'environnement.

Dans un mode de réalisation particulier, les données du premier type de données comprennent des données sélectionnées parmi la liste des données suivantes :

- des données de changement de masse ;
- des données de changement de pneumatique ;
- des données de changement d'état du véhicule automobile autonome.

Dans un mode de réalisation particulier, les données du second type de données comprennent des données sélectionnées parmi la liste des données suivantes :

- des données de conditions météorologiques ;
- des données du type de route ;
- des données d'état de route.

Dans un mode de réalisation particulier, les données du troisième type de données comprennent des données sélectionnées parmi la liste des données suivantes :

- des données de conduite libre ;
- des données de conduite nominale ;
- des données de conduite d'urgence.

Dans un mode de réalisation particulier, les étapes de réception et de traitement de la pluralité de données, l'étape de génération d'une réponse de contrôle et l'étape d'envoi de la commande sont réalisées selon une logique floue.

L'invention propose un système basé sur la logique floue qui est légèrement mis à jour/modifié en fonction des résultats des actions du véhicule. Il n'est pas ainsi nécessaire d'effectuer un apprentissage complet à chaque fois. Ce type d'apprentissage complet peut en effet fournir des performances complètement différentes d'un test à l'autre.

Un autre objet de l'invention concerne un dispositif d'aide à la conduite d'un véhicule automobile autonome selon la revendication 6.

Ainsi, grâce à ce dispositif décisionnel, la conduite autonome aura la possibilité d'imiter les réactions du conducteur humain lors des scénarios complexes en créant une base d'apprentissage pour optimiser en temps réel la réponse à apporter.

Un autre objet de l'invention concerne un produit programme d'ordinateur comportant des instructions de programme exploitables par le dispositif d'aide à la conduite selon un objet précédent, qui lorsqu'elles sont exécutées ou interprétées par ledit dispositif d'aide à la conduite déclenchent la mise en œuvre de la méthode d'aide à la conduite selon un autre objet précédent dans un véhicule automobile autonome.

Un autre objet de l'invention concerne un véhicule autonome comportant un dispositif d'aide à la conduite selon un des objets précédents.

La présente invention sera mieux comprise à la lecture de la description détaillée de modes de réalisation pris à titre d'exemples nullement limitatifs et illustrés par les dessins annexés sur lesquels :

La figure 1 est une vue schématique illustrant un véhicule automobile autonome conforme à l'invention ;

La figure 2 illustre le véhicule automobile autonome de la figure 1 en fonctionnement sur une route ;

La figure 3 est un schéma illustrant un dispositif d'aide à la conduite du véhicule automobile de la figure 1 sur la route de la figure 2 ;

La figure 4 est un schéma détaillant un système flou appartenant au dispositif d'aide à la conduite de la figure 3 ;

La figure 5 est un schéma détaillant le fonctionnement d'un agent d'apprentissage par renforcement appartenant au dispositif d'aide à la conduite de la figure 3 ;

La figure 6 est un schéma illustrant différentes étapes d'une méthode d'aide à la conduite du véhicule automobile de la figure 1, ladite méthode de contrôle étant mise en œuvre par le dispositif d'aide à la conduite de la figure 3.

L'invention n'est pas limitée aux modes de réalisation et variantes présentées et d'autres modes de réalisation et variantes apparaîtront clairement à l'homme du métier.

Sur les différentes figures, les éléments identiques ou similaires portent les mêmes références.

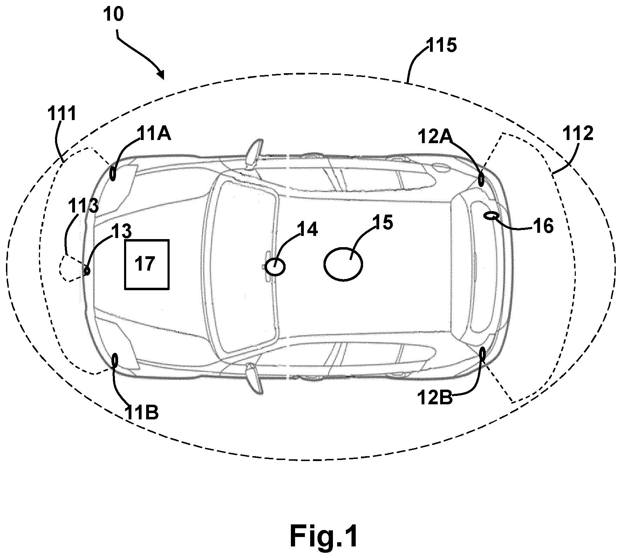

La figure 1 représente schématiquement une vue de dessus d'un véhicule automobile 10 conforme à la présente invention. Ce véhicule automobile 10 comprend une partie avant de véhicule, une partie arrière de véhicule, un toit de véhicule, un intérieur de véhicule, des moyens de direction (non représentés). Le véhicule automobile comprend également un châssis et un ou plusieurs panneaux de carrosserie montés ou fixés sur ledit châssis.

Le véhicule automobile 10 est ici un véhicule autonome. Par véhicule autonome, on entend un véhicule automobile totalement autonome ou semi-autonome. Il existe en effet plusieurs niveaux d'autonomie dans un véhicule automobile.

Dans un premier niveau, dit niveau 1, le véhicule automobile est responsable d'un nombre limité d'opérations de conduite associées audit véhicule automobile. Le conducteur reste alors responsable de la plupart des opérations de contrôle de conduite. Dans le niveau 1, les opérations de commande d'accélération et/ou de freinage (régulateur de vitesse, etc...) sont commandées par le véhicule automobile. Ce niveau 1 correspond à un niveau d'assistance à la conduite.

Dans un second niveau, dit niveau 2, le véhicule automobile est adapté pour collecter des informations (par exemple, via un ou plusieurs systèmes d'aide à la conduite, des capteurs, etc...) sur l'environnement externe (la route autour du véhicule automobile, la chaussée, le trafic routier, les conditions ambiantes). Dans ce niveau 2, le véhicule autonome est adapté pour utiliser les informations collectées afin de contrôler certaines opérations de conduite (par exemple, la direction, l'accélération, et/ou le freinage). Ce niveau 2 est un niveau d'automatisation partielle du véhicule automobile. Il convient de noter que pour le niveau 1 et le niveau 2, le conducteur doit conserver la pleine surveillance des opérations de conduite effectuées par le véhicule automobile autonome.

Dans un troisième niveau, dit niveau 3, le conducteur délègue toutes les opérations de conduite au véhicule automobile sauf lorsque ledit véhicule automobile demande au conducteur d'agir ou d'intervenir pour contrôler une ou plusieurs de ces opérations de conduite. Ce niveau 3 est un niveau d'automatisation conditionnelle.

Dans un quatrième niveau, dit niveau 4, le conducteur ne gère plus aucune opération de conduite. C'est le véhicule automobile qui contrôle alors l'ensemble des opérations de conduite, y compris lorsque le conducteur ne répond pas à une demande d'intervention. Le niveau 4 est un niveau d'automatisation élevée.

Dans un cinquième niveau, dit niveau 5, le véhicule automobile contrôle toutes les opérations de conduite. Le véhicule automobile surveille ainsi au cours du roulage le trafic routier, les acteurs mobiles sur la route (êtres humains, animaux), les obstacles immobiles sur la route, la route. A ce niveau 5, aucune interaction avec un conducteur humain n'est requise. Le niveau 5 est le niveau d'automatisation complète. Il convient de noter que pour les niveaux 3 à 5, le véhicule automobile est adapté pour surveiller les opérations de conduite ainsi que pour surveiller l'environnement externe audit véhicule automobile.

Pour pouvoir réaliser les différentes opérations de conduite dans ces différents niveaux d'autonomie, le véhicule automobile 10 comprend un certain nombre de capteurs tels que :

- un radar avant 11A, 11B;

- un radar arrière 12A, 12B;

- un capteur ultrasons 13 ;

- une caméra vidéo 14 ;

- un LIDAR 15;

- une antenne GPS 16.

Le radar avant comprend deux éléments de radar avant 11A, 11B disposés sur la partie avant de véhicule de part et d'autre d'un axe de symétrie dudit véhicule automobile 10. Le radar avant possède une zone de détection 111 à l'avant du véhicule automobile. Il est ainsi adapté pour détecter les positions des objets environnants. Il permet de mesurer la vitesse du véhicule automobile. Les informations recueillies par le radar avant 11A, 11B sont particulièrement utiles pour mettre en œuvre certaines opérations de conduite telles que le freinage d'urgence ou l'anti-franchissement de bandes centrales.

Le radar arrière comprend deux éléments de radar arrière 12A, 12B disposés sur la partie arrière de véhicule de part et d'autre de l'axe de symétrie dudit véhicule automobile 10. Le radar arrière possède une zone de détection 112 à l'arrière du véhicule automobile. Il est ainsi adapté pour détecter les positions des objets environnants. Il permet de mesurer la vitesse des autres véhicules automobiles qui suivent ledit véhicule automobile 10. Les informations recueillies par le radar arrière 12A, 12B sont particulièrement utiles pour mettre en œuvre certaines opérations de conduite telles que le freinage d'urgence ou l'anti-franchissement de bandes centrales.

Le capteur ultrasons 13 est disposé sur la partie avant du véhicule entre les deux éléments de radar avant 11A, 11B. Le capteur ultrasons 13 possède une zone de détection 113 beaucoup plus faible que la zone de détection 111 du radar avant 11A, 11B. Ce capteur à ultrasons 13 est ainsi adapté pour détecter des obstacles très proches. Les informations recueillies sont particulièrement utiles pour mettre en œuvre des opérations de conduite telles que le maintien d'un écart de sécurité avec un autre véhicule automobile précédent directement ledit véhicule automobile 10.

La caméra vidéo 14 est située ici derrière le rétroviseur. Les informations recueillies par cette caméra vidéo 14 sont particulièrement utiles pour la mise en œuvre de certaines opérations de conduite telles que le déchiffrage des panneaux de signalisation, le repérage des bordures et des bandes centrales, la détection d'acteurs mobiles sur la route (êtres humains, animaux).

Le LIDAR 15 (pour « LIght Detection And Ranging » en anglais) est un capteur situé ici sur le toit du véhicule automobile 10. Il permet d'effectuer des mesures de télédétection par laser. La télédétection par laser est une technique de mesure à distance fondée sur l'analyse des propriétés d'un faisceau de lumière renvoyé vers son émetteur. Le LIDAR possède une zone de détection 115 assez large, par exemple de l'ordre de 50 mètres de diamètre. Il permet de scanner en permanence l'environnement à 360° pour en faire une cartographie en 3D. Les informations recueillies par le LIDAR 15 sont utiles pour la mise en œuvre de certaines opérations de conduite telles que la détection d'obstacles, y compris la nuit.

L'antenne GPS 16 est située sur la partie arrière du véhicule automobile 10. Elle permet de recevoir des signaux GPS (pour « Global Positioning System » en anglais). Les données de navigation peuvent alors être mises à jour dans le véhicule automobile 10 à partir de ces signaux GPS.

Le véhicule automobile comprend également un ordinateur central 17 adapté pour traiter les différentes données des capteurs 11A, 11B, 12A, 12B, 13, 14, 15, 16. L'ordinateur central 17 et les capteurs 11A, 11B, 12A, 12B, 13, 14, 15, 16 sont reliés dans le véhicule automobile par un ou plusieurs réseaux (non représentés) de type bus CAN (pour « Controller Area Network » en anglais) pour le transport desdites données des capteurs.

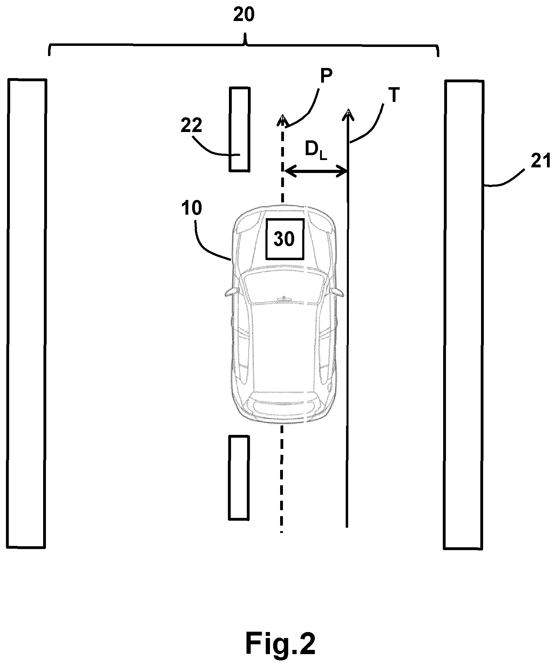

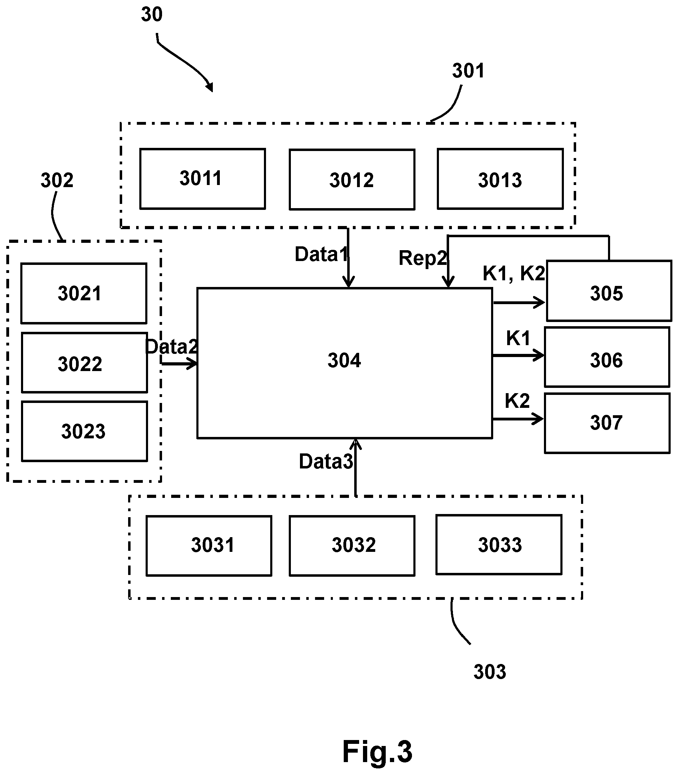

La figure 2 illustre le véhicule automobile autonome de la figure 1 sur une route 20. Afin de simplifier cette illustration, les capteurs 11A, 11B, 12A, 12B, 13, 14, 15 n'ont pas été représentés sur la figure 2. La route 20 est délimitée par deux bordures 21. Elle est de plus divisée en deux voies séparées par une pluralité de bandes centrales 22. Sur la figure 2, le véhicule roule sur la voie de droite en suivant une trajectoire réelle P. Cette trajectoire réelle P est ici décalée latéralement d'une distance $D_L$ par rapport à une trajectoire de référence T. La trajectoire de référence T a été préalablement calculée par le système de navigation du véhicule automobile 10, notamment à partir des données des signaux GPS reçues par l'antenne GPS 16. Cette trajectoire de référence T s'étend ici à mi-distance entre la bordure 21 et les bandes centrales 22. L'invention a pour but d'aider le véhicule 10 à suivre au mieux la trajectoire de référence T. Pour cela, le véhicule automobile 10 comprend un dispositif d'aide à la conduite 30 illustré à la figure 3. Ce dispositif d'aide à la conduite 30 est dans un mode de réalisation préférentiel intégré directement dans l'ordinateur central 16 du véhicule automobile de la figure 1.

La figure 3 illustre plus en détail le dispositif d'aide à la conduite 30. Comme il a déjà été précisé, ce dispositif d'aide à la conduite 30 est adapté pour contrôler les mouvements du véhicule automobile autonome 10. Il comprend :

- un module 301 d'évolution du véhicule ;

- un module 302 d'évolution de la route ;

- un module 303 d'évolution de l'environnement ;

- un système flou 304 ;

- un agent d'apprentissage par renforcement 305 ;

- un bloc 306 de contrôle d'un actionneur ;

- une interface Homme-Machine 307.

Le module d'évolution 301 du véhicule est adapté pour fournir un premier type de données data1. Ce premier type de données data 1 apporte des informations sur toute situation potentielle susceptible de modifier la dynamique du véhicule 10. Le module d'évolution 301 comprend :

- un bloc de changement de masse 3011 ;

- un bloc de changement de pneumatique 3012 ;

- un bloc de changement d'état du véhicule 3013 ;

Le bloc de changement de masse 3011 est adapté pour fournir des données de changement de masse. Ces données concernent la masse du véhicule automobile autonome 10 ainsi que sa répartition dans ledit véhicule (passagers, marchandise, etc...). Les données de changement de masse sont importantes car les caractéristiques associées à la masse du véhicule peuvent modifier complètement la dynamique du véhicule et influencer la décision la plus appropriée à prendre en fonction de la situation. Le bloc 3011 est ainsi chargé d'analyser tout biais par rapport à des valeurs nominales.

Le bloc de changement de pneumatique 3012 est adapté pour fournir des données de changement de pneumatique. Les pneumatiques constituent des points de contact entre le véhicule 10 et la route 20. Les données associées sont donc importantes car elles permettent d'obtenir une bonne estimation de la relation entre les forces latérales et l'angle de glissement, c'est-à-dire la raideur d'envirage. Cette raideur peut être évaluée en utilisant un observateur pour mesurer l'écart entre des valeurs nominales/des valeurs d'usines et des valeurs actualisées en temps réel.

Le bloc de changement d'état du véhicule 3013 est adapté pour fournir des données sur tout changement inattendu dans le véhicule automobile susceptible de modifier la dynamique de ce véhicule, tel qu'une panne de capteur, une crevaison, etc.

Les données du premier type de données data1 du module d'évolution 301 sont donc une combinaison de données provenant de ces différents blocs 3011, 3012, 3013.

Le module d'évolution 302 de la route est adapté pour fournir un second type de données data2. Ce second type de données data 2 apporte des informations sur toute situation potentielle susceptible de modifier l'état de la route. L'état de la route a une forte incidence sur la conduite du véhicule. Le module d'évolution 302 surveille ainsi tout changement potentiel pouvant découler du tracé de la chaussée.

Le module d'évolution 302 comprend :

- un bloc de conditions météorologiques 3021 ;

- un bloc de type de route 3022 ;

- un bloc d'état de la route 3023.

Le bloc de conditions météorologiques 3021 est adapté pour gérer l'évolution des conditions météorologiques, notamment en cas de neige, de verglas, de sécheresse ou de pluie. Le bloc 3021 est ainsi capable d'adapter la réponse optimale à la situation spécifique. Cette évolution peut être mesurée par un capteur de température installé sur le véhicule 10 ou par tout autre moyen.

Le bloc de type de route 3022 est adapté pour gérer l'évolution du type de route sur laquelle roule le véhicule 10. En effet, l'adhérence change considérablement lorsque le véhicule roule sur du béton, de l'asphalte, du gravier, des pavés ou toute autre surface, ce qui modifie la dynamique du véhicule. Cette évolution peut être mesurée par une caméra frontale pour détecter la surface de conduite, par une carte numérique détaillée incluant cette information ou par tout autre moyen.

Le bloc d'état de la route 3023 est adapté pour détecter tout changement soudain et inattendu de la surface de la route, tel qu'un trou, une tache d'huile ou toute autre situation dangereuse qui pourrait avoir un impact sur la dynamique du véhicule.

Les données du second type de données data2 du module d'évolution 302 sont donc une combinaison de données provenant de ces différents blocs 3021, 3022, 3023.

Le module 303 d'évolution de l'environnement est adapté pour fournir un troisième type de données data3. Ce troisième type de données data3 apporte des informations sur des interactions avec des tiers tels que des piétons, d'autres véhicules automobiles (voitures, motos, camions etc...).

Le module 303 d'évolution de l'environnement comprend :

- un bloc 3031 de conduite libre ;

- un bloc 3032 de conduite nominale ;

- un bloc 3033 de conduite d'urgence.

Le bloc 3031 de conduite libre comprend l'ensemble des cas où aucune interaction n'est présente. Ce bloc fournit ainsi des données de conduite libre reprenant tous les scénarios de conduite sur autoroute peu encombrée ou tout autre situation potentielle dans laquelle aucun tiers ne se trouve dans l'horizon électronique du véhicule, c'est-à-dire le champ de vision des capteurs d'obstacle.

Le bloc 3032 de conduite nominale comprend tous les scénarios potentiels et la manière dont ils sont gérés. Ce bloc fournit ainsi des données de conduite nominale reprenant différents comportements en fonction du scénario de conduite, tel qu'un rond-point, une intersection, une réduction de voie, une interaction avec des feux de circulation, une voie de sortie, etc. Le bloc 3032 peut inclure des traitements spécifiques pour chaque scénario basé sur des cas d'utilisation ou un traitement général selon un concept de généralisation dans lequel tous les véhicules sont traduits en une seule voie et traités en tant que tel.

Le bloc 3033 de conduite d'urgence est adapté pour gérer tous les changements soudains et inattendus au cours de la conduite. Ce bloc fournit ainsi des données de conduit d'urgence concernant, par exemple, un arrêt suite à l'injonction des forces de l'ordre, un camion de pompier, un piéton inattendu ou toute autre situation soudaine parmi les situations de conduite nominales où le véhicule doit modifier ses règles de décision préétablies.

Les données du troisième type de données data3 du module 303 d'évolution de l'environnement sont donc une combinaison de données provenant de ces différents blocs 3031, 3032, 3033.

Les données du premier type de données data1, les données du second type de données data 2 et les données du troisième type de données data 3 déterminent une situation actuelle Sa dans laquelle se trouve le véhicule automobile autonome 10.

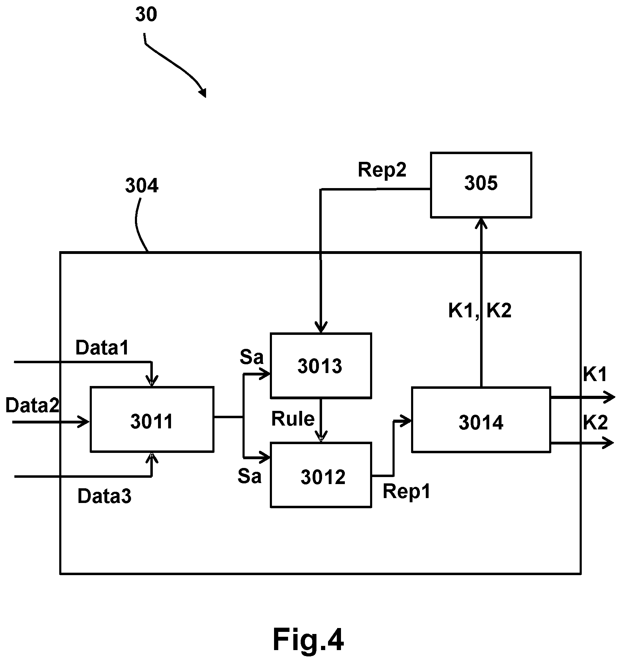

Le dispositif d'aide à la conduite 30 comprend également le système flou 304, l'agent d'apprentissage par renforcement 305, le bloc 306 de contrôle d'un actionneur et l'interface Homme-Machine 307. Le système flou 304 est adapté pour délivrer une première commande K1 au bloc 306 de contrôle d'un actionneur et une seconde commande K2 à une interface Homme-Machine 307. Ces commandes K1 et K2 sont générées à partir de la situation actuelle résultant des données de premier type de données data1, des données de second type de données data2 et des données de troisième type de données data3. Le système flou 304 est, ici, également adapté pour transmettre à l'agent d'apprentissage par renforcement 305 la première commande K1 et la seconde commande K2 résultant de la situation actuelle. Le système flou 304 est adapté pour recevoir de la part de l'agent d'apprentissage par renforcement 305 une nouvelle réponse de contrôle Rep2. Cette nouvelle réponse de contrôle Rep2 est optimisée par rapport à la situation actuelle Sa. Le système flou 304 sera décrit plus en détail par la suite à l'aide de la figure 4.

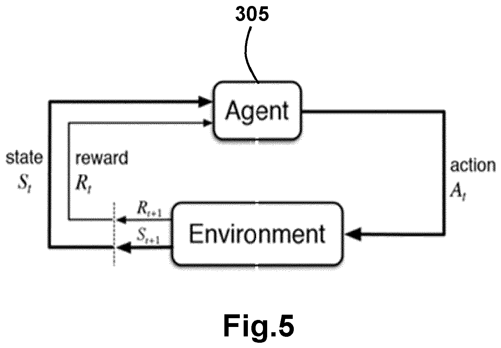

L'agent d'apprentissage par renforcement 305 est adapté pour recevoir les commandes K1 et K2 générées par le système flou 304. L'agent d'apprentissage par renforcement 305 est adapté pour recevoir également une information de qualité (non représentée) sur le résultat de la première commande K1 pour contrôler le véhicule automobile autonome. En fonction de cette information de qualité, l'agent d'apprentissage par renforcement 305 délivre au système flou 304 la nouvelle réponse de contrôle Rep2. Le fonctionnement de l'agent d'apprentissage par renforcement 305 sera décrit plus en détail par la suite à l'aide de la figure 5.

Le bloc 306 de contrôle d'un actionneur est adapté pour recevoir la première commande K1.

En fonction de cette commande K1, un actionneur est utilisé pour piloter la trajectoire du véhicule automobile autonome 10. Cet actionneur est, par exemple, une colonne de direction du véhicule automobile autonome.

L'interface Homme-Machine 307 est adaptée pour communiquer avec un conducteur humain. Il peut comprendre ainsi des dispositifs sonores ou des dispositifs lumineux. Ces dispositifs sont activés, par exemple, en cas de danger nécessitant un changement brusque de la trajectoire du véhicule automobile autonome 10.

La figure 4 illustre de manière plus détaillée le système flou 304 du dispositif d'aide à la conduite 30. Ce système flou 304 comprend :

- un bloc de fuzzification 3011 ;
- un moteur d'inférence 3012 ;
- une base de données 3013 ;
- un bloc de defuzzification 3014.

Le bloc de fuzzification 3011 est adapté pour recevoir et traiter une pluralité de données des différents types de données data1, data2, data3 en vue de déterminer la situation actuelle Sa à laquelle est confronté le véhicule automobile autonome 10. Dans ce bloc, la pluralité de données des différents types de données data1, data2, data3 sont traduites en valeurs linguistiques représentant la situation actuelle Sa. Cette traduction dépend de fonctions d'appartenance qui représentent les connaissances subjectives du conducteur humain. La situation actuelle Sa est ensuite transmise à la base de données 3013 et au moteur d'inférence 3012.

La base de données 3013 est adaptée pour stocker des règles d'inférences. Ces règles d'inférences ont été formulées à partir de l'expérience humaine. Une telle règle d'inférence est par exemple : Si la masse du véhicule est "lourde" et que les pneus sont "usés", le risque est "élevé" et la décision est "conservatrice". La base de données 3013 est adaptée pour transmettre au moteur d'inférence 3012 la règle d'inférence Rule adaptée à la situation actuelle Sa. La base de données 3013 est, en outre, adaptée pour recevoir la nouvelle réponse de contrôle Rep2 provenant de l'agent d'apprentissage par renforcement 305. Cette nouvelle réponse Rep2 permet de mettre à jour les règles d'inférence afin d'optimiser la réponse à apporter au regard de la situation actuelle Sa, si celle-ci se reproduit dans le futur.

Le moteur d'inférence 3012 est adapté pour recevoir la règle d'inférence Rule provenant de la base de données 3013. Le moteur d'inférence 3012 applique alors cette règle d'inférence à la situation actuelle Sa pour générer une réponse de contrôle Rep1 appropriée. Par exemple, le moteur d'inférence 3012 peut générer une réponse de contrôle Rep1 de la forme : la masse du véhicule est lourde et les pneus sont usés, le risque est élevé et la décision est conservatrice.

Le bloc de defuzzification 3014 est adapté pour recevoir la réponse de contrôle Rep1 appropriée. A partie de cette réponse de contrôle Rep1, le bloc de defuzzification 3014 transmet la première commande K1 au bloc 306 de contrôle d'un actionneur et la seconde commande K2 à l'interface Homme-Machine 307. La première commande K1 et la seconde commande K2 sont, ici, également transmises à l'agent d'apprentissage par renforcement 305. Le bloc de defuzzification 3014 met en œuvre la méthode du centre de l'aire dite méthode CoA (pour Center of Area en anglais) en vue de fournir un résultat moyen à partir d'une conclusion de chaque règle donnée dans le processus d'inférence. La première commande K1 va de valeurs floues à des valeurs nettes, donnant ainsi une mesure du risque de la situation et de la stratégie à suivre. La première commande K1 inclut une valeur de mesure pour le risque de la manœuvre en cours et une valeur de décision pour la stratégie de conduite à suivre. Les deux valeurs se situent dans la fourchette de [0, 1] où 0 signifie le risque le plus faible et la stratégie la plus performante et 1 signifie le risque le plus élevé et la nécessité d'adopter la stratégie la plus prudente. Une représentation mathématique de la méthode CoA est la suivante :

$$Output = \frac{\sum w_i O_i}{\sum w_i}$$

Dans laquelle $w_i$ représente le poids attribué à chaque évaluation de règle dans le processus d'inférence et $O_i$ représente les valeurs de singletons attribuées aux valeurs linguistiques de sortie. Le résultat Output correspond à la sortie du bloc de defuzzification 3014.

La figure 5 détaille le fonctionnement de l'agent d'apprentissage par renforcement 305.

A chaque cycle, l'agent d'apprentissage 305 reçoit des informations sur l'état de l'environnement (les données data1, data2, data3). A partir de ces informations, l'agent 305 sélectionne une décision à exécuter qui modifie l'état de l'environnement et entraine une récompense. Le problème que cherche résoudre l'agent d'apprentissage 304 est composé des éléments suivants : un ensemble S d'états possibles de l'environnement, un ensemble A d'actions possibles a et un ensemble R de récompenses r. Cependant, il est nécessaire de souligner que, malgré la récompense immédiate r, le véritable objectif est de trouver une politique ou une tactique d'action qui maximise une récompense finale rf. Considérant que la conduite est un processus d'apprentissage, l'application de cette technique s'inscrit parfaitement dans le module de prise de décision autonome du véhicule. Pour l'apprentissage, l'agent d'apprentissage 305 utile le Q-learning. Le Q-learning est une méthode d'apprentissage par renforcement qui est basée sur le calcul d'une valeur de qualité Q associée aux actions disponibles dans un état donné. Cette estimation de la qualité est effectuée de manière itérative, c'est-à-dire en actualisant une valeur Q(s,a) à chaque cycle où l'action a est sélectionnée dans cet état. La mise à jour se fait par le biais de l'équation suivante :

$$Q(s_t,a_t) = Q(s_t,a_t) + \alpha(r_t + \beta_{a_{t+1}} \max(Q(s_{t+1},a_{t+1})) - Q(s_t,a_t))$$

Dans laquelle $s_t$ et $a_t$ sont l'état et l'action entreprise au moment t et $r_t$ la récompense obtenue pour cette action. La variable $\alpha$ est un paramètre connu sous le nom de taux d'apprentissage, qui fait référence à la vitesse à laquelle l'algorithme ajuste ses connaissances en fonction de l'expérience. La valeur de cette variable $\alpha$ est comprise entre 0 et 1, cette valeur étant proportionnelle à la vitesse souhaitée. La variable $\beta$ est un facteur d'actualisation de l'algorithme qui établit la priorité de la récompense à long terme par rapport à la récompense immédiate. La variable de cette variable $\beta$ est comprise entre 0 et 1, où 1 représente la priorité la plus élevée de la récompense à long terme. Une fois que la fonction Q converge vers sa valeur finale, la politique optimale du système peut être obtenue en sélectionnant dans chaque état l'action ayant la valeur maximale de Q. Cette politique se traduit par le terme $\max_{a_{t+1}}(Q(s_{t+1}, a_{t+1}))$.

Le principal avantage de cette approche par récompense est qu'elle ne dépend pas de la définition d'un modèle d'évolution ou d'une politique de contrôle préalablement définie par l'utilisateur, mais qu'elle est basée directement sur l'interaction du système avec son environnement et sur la récompense reçue à chaque étape. En outre, elle correspond parfaitement à l'objectif du bloc d'apprentissage de ce dispositif puisqu'elle n'intervient que lorsqu'elle rencontre une situation à laquelle elle a déjà été confrontée, et non pas en utilisant l'apprentissage pour de nouvelles situations qui seront basées sur le bloc de décision multi-évolution. Cela correspond au comportement humain où des manoeuvres plus agressives sont effectuées pour des situations de conduite déjà rencontrées dans le passé, alors qu'un comportement plus conservateur est appliqué pour les nouvelles situations/scénarios de conduite.

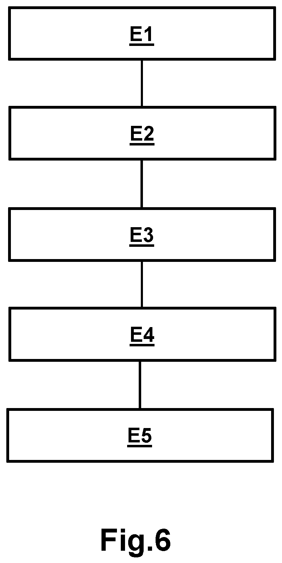

La méthode d'aide à la conduite du véhicule automobile de la figure 10 est décrite par la suite à l'appui des figures 1 à 5 et de la figure 6.

Sur la figure 6, dans une étape E1 de réception, une pluralité de données data1, data2, data3 sont reçues par le bloc de fuzzification 3011.

Dans une étape E2 de traitement, les données reçues data1, data2, data3 sont traitées par le bloc de fuzzification 3011 pour déterminer la situation actuelle Sa du véhicule automobile autonome 10.

Dans une étape E3, une réponse de contrôle Rep1 est générée par le moteur d'inférence 3012 par rapport à la situation actuelle Sa.

Dans une étape E4, une commande K1 est envoyée par le bloc de defuzzification 3014 pour contrôler le véhicule automobile autonome 10. Cette commande K1 est fonction de la réponse à apporter Rep1. Au cours de cette étape E4, la commande K1 est également transmise à l'agent d'apprentissage par renforcement 305.

Dans une étape E5 de génération par renforcement, la nouvelle réponse de contrôle Rep2 est générée par l'agent d'apprentissage par renforcement 305. Cette nouvelle réponse de contrôle Rep2 est fonction d'une information de qualité sur le résultat de la commande K1 pour contrôler le véhicule 10. Celle-ci est optimisée par rapport à la situation actuelle Sa. Cette nouvelle réponse de contrôle Rep 2 est transmise à la base de données 3013 pour une mise à jour des règles d'inférences.

Les étapes de réception E1 et de traitement E2 de la pluralité de données data1, data2, data3, l'étape E3 de génération d'une réponse de contrôle Rep1 et l'étape E4 d'envoi de la commande K1 sont réalisées selon une logique floue.

La méthode d'aide à la conduite du véhicule automobile 10 et le système d'aide à la conduite 30 associé permettent ainsi d'avoir :

- un système intelligent de prise de décision relié à un module d'évolution du véhicule relatif à toute situation potentielle susceptible de modifier la dynamique du véhicule ;

- un apprentissage implémenté par une logique flou et un apprentissage par renforcement.

L'invention concerne également un produit programme d'ordinateur comportant des instructions de programme exploitables par le dispositif d'aide à la conduite 30, qui lorsqu'elles sont exécutées ou interprétées par ledit dispositif d'aide à la conduite 30 déclenchent la mise en œuvre de la méthode d'aide à la conduite.

L'invention concerne également un véhicule automobile 10 comprenant le dispositif d'aide à la conduite 30. Ce véhicule automobile est un véhicule de tourisme, comme il est représenté sur la figure 1 et la figure 2. En variante, le véhicule automobile est un tout autre véhicule tel qu'un bus ou un camion.

L'invention n'est pas limitée aux modes de réalisation et variantes présentées et d'autres modes de réalisation et variantes apparaîtront clairement à l'homme du métier.

**Revendications**

1. Méthode d'aide à la conduite d'un véhicule automobile autonome (10) sur une route, ladite méthode d'aide à la conduite comportant :

   - une étape (E1) de réception d'une pluralité de données (data1, data2, data3), lesdites données comprenant un premier type de données (data1), un second type de données (data2) et un troisième type de données (data3), les données du premier type de données concernant une évolution du véhicule, les données du second type de données concernant une évolution de la route, les données du troisième type de données concernant une évolution de l'environnement ;
   - une étape (E2) de traitement de la pluralité des données reçues (data1, data2, data3) pour déterminer une situation actuelle (Sa) du véhicule automobile autonome (10) ;
   - une étape (E3) de transmission, par une base de données (3013) à un moteur d'inférence (3012), d'une règle d'inférence adaptée à ladite situation actuelle (Sa) et de génération, par le moteur d'inférence (3012), d'une réponse de contrôle (Rep1) à partir de ladite règle d'inférence ;
   - une étape (E4) d'envoi d'une commande (K1) pour contrôler la trajectoire du véhicule automobile autonome (10), ladite commande (K1) étant fonction de ladite réponse à apporter (Rep1) ;
   - la méthode étant **caractérisée en ce qu'**elle comprend, en fonction d'une information de qualité sur le résultat de la commande pour contrôler la trajectoire du véhicule automobile autonome (10), une étape (E5) de génération par apprentissage par renforcement d'une nouvelle réponse de contrôle (Rep2), ladite nouvelle réponse de contrôle (Rep2) étant utilisée pour mettre à jour les règles d'inférence de la base de données (3013).

2. Méthode d'aide à la conduite selon la revendication 1, dans laquelle les données du premier type de données (data 1) comprennent des données sélectionnées parmi la liste des données suivantes :

   - des données de changement de masse ;
   - des données de changement de pneumatique ;
   - des données de changement d'état du véhicule automobile autonome.

3. Méthode d'aide à la conduite selon l'une quelconque des revendications précédentes, dans laquelle les données du second type de données (data2) comprennent des données sélectionnées parmi la liste des données suivantes :

   - des données de conditions météorologiques ;
   - des données du type de route ;
   - des données d'état de route.

4. Méthode d'aide à la conduite selon l'une quelconque des revendications précédentes, dans laquelle les données du troisième type de données (data3) comprennent des données sélectionnées parmi la liste des données suivantes :

   - des données de conduite libre ;
   - des données de conduite nominale ;
   - des données de conduite d'urgence.

5. Méthode d'aide à la conduite selon l'une quelconque des revendications précédentes, dans laquelle les étapes de réception et de traitement de la pluralité de données (data1, data2, data3), l'étape de génération d'une réponse de contrôle (Rep1) et l'étape d'envoi de la commande (K1) sont réalisées selon une logique floue.

6. Dispositif d'aide à la conduite d'un véhicule automobile autonome sur une route, ledit dispositif (30) comprenant :

   - un système flou (304) comportant :

- un bloc de fuzzification (3011) adapté pour recevoir et traiter une pluralité de données (data1, data2n data3) en vue de déterminer une situation actuelle (Sa) du véhicule automobile autonome (10), lesdites données comprenant un premier type de données (data1), un second type de données (data2) et un troisième type de données (data3), les données du premier type de données concernant une évolution du véhicule, les données du second type de données concernant une évolution de la route, les données du troisième type de données concernant une évolution de l'environnement ;

- un moteur d'inférence (3012) adapté pour recevoir une règle d'inférence adaptée à la situation actuelle (Sa) depuis une base de données (3013) en vue de générer une réponse de contrôle (Rep1) à partir de ladite règle d'inférence ;

- un bloc de defuzzification (3014) adapté pour commander un actionneur (K1) en vue de contrôler la trajectoire du véhicule automobile autonome (10), en fonction de la réponse de contrôle (Rep1) à apporter ;

- un agent d'apprentissage par renforcement (305), ledit agent étant adapté pour générer une nouvelle réponse (Rep2) en fonction d'une information de qualité sur le résultat de la commande (K1) pour le contrôle de la trajectoire dudit véhicule automobile autonome (10), ladite nouvelle réponse étant utilisée pour mettre à jour les règles d'inférence de la base de données (3013).

7. Produit programme d'ordinateur comportant des instructions de programme exploitables par le dispositif d'aide à la conduite (30) de la revendication 6, qui lorsqu'elles sont exécutées ou interprétées par ledit dispositif d'aide à la conduite (30) déclenchent la mise en œuvre de la méthode d'aide à la conduite selon l'une quelconque des revendications 1 à 6 dans un véhicule automobile autonome (10).

8. Véhicule automobile autonome comportant un dispositif d'aide à la conduite (30) selon la revendication 6.

**Patentansprüche**

1. Verfahren zur Unterstützung des Fahrens eines autonomen Kraftfahrzeugs (10) auf einer Straße, wobei das Verfahren zur Unterstützung des Fahrens Folgendes umfasst:

- einen Schritt (E1) des Empfangens einer Vielzahl von Daten (datal, data2, data3), wobei die Daten einen ersten Datentyp (data1), einen zweiten Datentyp (data2) und einen dritten Datentyp (data3) beinhalten, wobei die Daten des ersten Datentyps eine Veränderung des Fahrzeugs betreffen, die Daten des zweiten Datentyps eine Veränderung der Straße betreffen, die Daten des dritten Datentyps eine Veränderung der Umgebung betreffen;

- einen Schritt (E2) des Verarbeitens der Vielzahl der empfangenen Daten (data1, data2, data3), um eine aktuelle Situation (Sa) des autonomen Kraftfahrzeugs (10) zu bestimmen;

- einen Schritt (E3) des Übertragens, durch eine Datenbank (3013) an eine Inferenzmaschine (3012), einer Inferenzregel, die an die aktuelle Situation (Sa) angepasst ist, und des Erzeugens, durch die Inferenzmaschine (3012), einer Steuerantwort (Rep1) auf Grundlage der Inferenzregel;

- einen Schritt (E4) des Sendens eines Befehls (K1) zur Steuerung der Bahn des autonomen Kraftfahrzeugs (10), wobei der Befehl (K1) von der zu erbringenden Antwort (Rep1) abhängt;

- wobei das Verfahren **dadurch gekennzeichnet ist, dass** es in Abhängigkeit von einer Qualitätsinformation bezüglich des Ergebnisses des Befehls zur Steuerung der Bahn des autonomen Kraftfahrzeugs (10) einen Schritt (E5) des Erzeugens, durch Verstärkungslernen, einer neuen Steuerantwort (Rep2) beinhaltet, wobei die neue Steuerantwort (Rep2) dazu verwendet wird, die Inferenzregeln der Datenbank (3013) zu aktualisieren.

2. Verfahren zur Unterstützung des Fahrens nach Anspruch 1, wobei die Daten des ersten Datentyps (data1) Daten beinhalten, die aus der Liste der folgenden Daten ausgewählt werden:

- Massenänderungsdaten;
- Reifenänderungsdaten;
- Zustandsänderungsdaten des autonomen Kraftfahrzeugs.

3. Verfahren zur Unterstützung des Fahrens nach einem der vorhergehenden Ansprüche, wobei die Daten des zweiten Datentyps (data2) Daten beinhalten, die aus der Liste der folgenden Daten ausgewählt werden:

- Wetterbedingungsdaten;
- Daten über den Straßentyp;
- Straßenzustandsdaten.

**4.** Verfahren zur Unterstützung des Fahrens nach einem der vorhergehenden Ansprüche, wobei die Daten des dritten Datentyps (data3) Daten beinhalten, die aus der Liste der folgenden Daten ausgewählt werden:

- Daten eines Fahrens unter freien Bedingungen;
- Daten eines Fahrens unter Nennbedingungen;
- Daten eines Fahrens unter Notfallbedingungen.

**5.** Verfahren zur Unterstützung des Fahrens nach einem der vorhergehenden Ansprüche, wobei die Schritte des Empfangens und des Verarbeitens der Vielzahl von Daten (datal, data2, data3), der Schritt des Erzeugens einer Steuerantwort (Rep1) und der Schritt des Sendens des Befehls (K1) gemäß einer Fuzzy-Logik durchgeführt werden.

**6.** Vorrichtung zur Unterstützung des Fahrens eines autonomen Kraftfahrzeugs auf einer Straße, wobei die Vorrichtung (30) Folgendes beinhaltet:

- ein Fuzzy-System (304), umfassend:
- einen Fuzzifizierungsblock (3011), der dazu angepasst ist, eine Vielzahl von Daten (datal, data2, data3) zu empfangen und zu verarbeiten, um eine aktuelle Situation (Sa) des autonomen Kraftfahrzeugs (10) zu bestimmen, wobei die Daten einen ersten Datentyp (data1), einen zweiten Datentyp (data2) und einen dritten Datentyp (data3) beinhalten, wobei die Daten des ersten Datentyps eine Veränderung des Fahrzeugs betreffen, die Daten des zweiten Datentyps eine Veränderung der Straße betreffen, die Daten des dritten Datentyps eine Veränderung der Umgebung betreffen;
- eine Inferenzmaschine (3012), die dazu angepasst ist, eine an die aktuelle Situation (Sa) angepasste Inferenzregel von einer Datenbank (3013) zu empfangen, um auf Grundlage der Inferenzregel eine Steuerantwort (Rep1) zu erzeugen;
- einen Defuzzifizierungsblock (3014), der dazu angepasst ist, in Abhängigkeit von der zu erbringenden Steuerantwort (Rep1) ein Betätigungselement (K1) anzusteuern, um die Bahn des autonomen Kraftfahrzeugs (10) zu steuern;
- einen Agenten für Verstärkungslernen (305), wobei der Agent dazu angepasst ist, in Abhängigkeit von einer Qualitätsinformation bezüglich des Ergebnisses des Befehls (K1) zur Steuerung der Bahn des autonomen Kraftfahrzeugs (10) eine neue Antwort (Rep2) zu erzeugen, wobei die neue Antwort dazu verwendet wird, die Inferenzregeln der Datenbank (3013) zu aktualisieren.

**7.** Computerprogrammprodukt, das durch die Vorrichtung zur Unterstützung des Fahrens (30) nach Anspruch 6 nutzbare Programmanweisungen umfasst, die, wenn sie durch die Vorrichtung zur Unterstützung des Fahrens (30) ausgeführt oder interpretiert werden, die Umsetzung des Verfahrens zur Unterstützung des Fahrens nach einem der Ansprüche 1 bis 6 in einem autonomen Kraftahrzeug (10) auslösen.

**8.** Autonomes Kraftfahrzeug, umfassend eine Vorrichtung zur Unterstützung des Fahrens (30) nach Anspruch 6.

**Claims**

**1.** Method for assisting in the driving of an autonomous motor vehicle (10) on a road, said driving assistance method comprising:

- a step (E1) of reception of a plurality of data (data1, data2, data3), said data comprising a first type of data (data1), a second type of data (data2) and a third type of data (data3), the data of the first type of data concerning an evolution of the vehicle, the data of the second type of data concerning an evolution of the road, the data of the third type of data concerning an evolution of the environment;
- a step (E2) of processing of the plurality of the received data (data1, data2, data3) to determine a current situation (Sa) of the autonomous motor vehicle (10);
- a step (E3) of transmission, by a database (3013) to an inference engine (3012), of an inference rule suited to said current situation (Sa) and of generation, by the inference engine (3012), of a control response (Rep1) from said inference rule;
- a step (E4) of sending of a command (K1) to control the path of the autonomous motor vehicle (10), said command (K1) being dependent on said response to be made (Rep1);
- the method being **characterized in that** it comprises, based on an item of quality information on the result of the command to control the path of the autonomous motor vehicle (10), a step (E5) of generation, by reinforcement learning, of a new control response (Rep2), said new control response (Rep2) being used to update the inference rules of the database (3013).

2. Driving assistance method according to Claim 1, wherein the data of the first type of data (data1) comprise data selected from among the list of the following data:

   - data on change of weight;
   - data on change of tyre;
   - data on change of the status of the autonomous motor vehicle.

3. Driving assistance method according to either of the preceding claims, wherein the data of the second type of data (data2) comprise data selected from among the list of the following data:

   - data on weather conditions;
   - data on the type of road;
   - data on the state of the road.

4. Driving assistance method according to any one of the preceding claims, wherein the data of the third type of data (data3) comprise data selected from among the list of the following data:

   - free driving data;
   - nominal driving data;
   - emergency driving data.

5. Driving assistance method according to any one of the preceding claims, wherein the steps of reception and of processing of the plurality of data (data1, data2, data3), the step of generation of a control response (Rep1) and the step of sending of the command (K1) are performed according to a fuzzy logic.

6. Device for assisting in the driving of an autonomous motor vehicle on a road, said device (30) comprising:

   - a fuzzy system (304) comprising:
   - a fuzzying block (3011) suitable for receiving and processing a plurality of data (data1, data2, data3), in order to determine a current situation (Sa) of the autonomous motor vehicle (10), said data comprising a first type of data (data1), a second type of data (data2) and a third type of data (data3), the data of the first type of data concerning an evolution of the vehicle, the data of the second type of data concerning an evolution of the road, the data of the third type of data concerning an evolution of the environment;
   - an inference engine (3012) suitable for receiving an inference rule suited to the current situation (Sa) from a database (3013) in order to generate a control response (Rep1) from said inference rule;
   - a defuzzying block (3014) suitable for commanding an actuator (K1) in order to control the path of the autonomous motor vehicle (10), according to the control response (Rep1) to be made;
   - a reinforcement learning agent (305), said agent being suitable for generating a new response (Rep2) according to an item of quality information on the result of the command (K1) for the control of the path of said autonomous motor vehicle (10), said new response being used to update the inference rules of the database (3013).

7. Computer program product comprising program instructions that can be used by the driving assistance device (30) of Claim 6, which, when they are executed or interpreted by said driving assistance device (30), trigger the implementation of the driving assistance method according to any one of Claims 1 to 6 in an autonomous motor vehicle (10).

8. Autonomous motor vehicle comprising a driving assistance device (30) according to Claim 6.

**Fig.1**

**Fig.2**

Fig.3

**Fig.4**

305

**Fig.5**

Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20180348763 A
- US 20200218271 A1
- US 20200276988 A1